# FASCICULE DE BREVET EUROPEEN

(11) **EP 0 545 788 B1**
(45) Date de publication et mention de la délivrance du brevet: **04.09.1996**
(21) Numéro de dépôt: 92403194.1
(22) Date de dépôt: 26.11.1992
(51) Int. Cl.: G05B 19/42, G05B 19/18, B23Q 15/24

(54) **Procédé et dispositif pour le positionnement d'un outil vis-à-vis de l'axe d'un tube**
Verfahren und Anordnung zur Positionierung eines Werkzeugs gegenüber der Achse einer Rohr
Procedure and device for positioning a tool in front of the axis of a tube

(30) Priorité: 03.12.1991 FR 9114957
(43) Date de publication de la demande: 09.06.1993
(73) Titulaire: FRAMATOME, 92084 Paris-la-Défense (FR)
(72) Inventeur: Blocquel, Alain, F-69570 Dardilly (FR)
(74) Mandataire: Armengaud Ainé, Alain

(56) Documents cités:
- DE-A- 3 206 337
- DE-A- 3 735 145
- DE-A- 3 837 042
- FR-A- 2 628 671
- US-A- 4 635 111
- APPLIED OPTICS vol. 28, no. 14, 15 Juillet 189, NEW YORK US pages 2837 - 2846 , XP000067189 LEO G. MONFORD 'Video alignment system for remote manipulator.'

## Description

La présente invention est relative à un procédé pour assurer le positionnement à distance d'un outil par rapport à une référence déterminée, telle notamment que l'axe longitudinal d'un élément tubulaire. L'invention concerne également un dispositif pour la mise en oeuvre de ce procédé.

L'utilisation d'un outil d'intervention dans certaines installations comportant une pluralité de tubes parallèles, du genre par exemple mais de façon non limitative d'un générateur de vapeur qui comprend usuellement, à l'intérieur d'une enceinte fermée, au moins une plaque transversale dite plaque à tubes, séparant cette enceinte et à partir de laquelle s'étendent ces tubes qui traversant la plaque et sont parcourus par un fluide sous pression échangeant des calories à travers leur paroi, exige un positionnement rapide, précis et sûr de l'outil par rapport à l'axe de chaque tube sur lequel il y a lieu d'intervenir à partir d'une région située d'un côté de la plaque à tubes à l'intérieur de l'enceinte et dans laquelle est introduit cet outil.

En raison des conditions qui règnent dans l'enceinte, et notamment du fait de la présence de rayonnements radioactifs, il est évident que ce positionnement de l'outil par rapport à un quelconque des tubes à traiter, doit être réalisé à distance et de façon télécommandée, l'outil étant embarqué ou fixé sur un bras de télémanipulateur permettant de le déplacer selon les trois directions de l'espace, notamment pour le recaler par rapport à une direction de référence donnée qui, le plus généralement, est constituée par l'axe du tube concerné. Par ailleurs, il est pratiquement indispensable, pour éviter tout risque de détérioration des tubes ou de l'outil, que le centrage de l'un par rapport à l'autre s'effectue, sans aucun contact physique entre eux.

On connaît déjà des dispositifs de ce genre, propres à réaliser le centrage d'un tel outil vis-à-vis de l'axe généralement vertical d'un tube, appartenant notamment à un générateur de vapeur, ces dispositifs utilisant des palpeurs mécaniques et qui, précisément, exigent un contact direct entre l'outil et la plaque à tubes, avec les inconvénients déjà cités que l'objet de l'invention se propose d'éviter.

D'autres solutions ont par ailleurs été envisagées, comme notamment dans le FR-A-2 628 671, qui illustre un ensemble de télémanipulation assurant le centrage souhaité, commandé à distance et sans contact physique entre l'outil et le tube. En principe, le dispositif décrit dans ce brevet antérieur comprend un support radial en forme de rail, pouvant pivoter autour du centre de la plaque tubulaire et s'étendant sous et parallèlement à cette plaque. Un chariot adapté à coulisser selon la longueur de ce bras comporte d'une part un axe sur lequel est montée une caméra de prise de vues et d'autre part un second axe portant l'outil d'intervention et de contrôle. L'objectif de la caméra, dirigé vers la plaque tubulaire et dont l'axe est alors parallèle à celui des tubes détermine, par suite du contraste créé du fait de la mise en oeuvre de moyens d'éclairement de la zone interne du tube visée par la caméra, le contour de l'extrémité de ce tube. Des moyens de calcul et de commande reliés à la caméra, sont alors exploités pour localiser de façon précise la position de l'axe de ce tube avec lequel, par un déplacement approprié du chariot, on amène en coïncidence étroite l'axe de la caméra. Une fois cette opération effectuée, le chariot est à nouveau déplacé afin de centrer l'outil dans l'axe du tube au moyen d'une seconde translation, qui vient ainsi substituer l'outil à la caméra, en permettant d'intervenir à l'intérieur du tube en étant parfaitement positionné vis-à-vis de celui-ci.

Un tel dispositif présente l'inconvénient de nécessiter la mise en oeuvre de moyens qui sont généralement complexes à commander et sont ordinairement coûteux, ces moyens comportant notamment un ordinateur et des capteurs de contrôle de position du chariot dont les indications sont gérées par cet ordinateur. En outre, l'axe de visée de la caméra étant distinct de celui de l'outil, une translation est à chaque fois nécessaire pour substituer l'un à l'autre, ce qui pénalise la précision finale du centrage réalisé.

La présente invention a pour objet un procédé et un dispositif de centrage de conception simple et de grande précision, pour un outil monté sur un bras de manipulation ou une structure porteuse télécommandée analogue, vis-à-vis de l'axe d'un tube, ce centrage s'effectuant directement au moyen du bras porteur de l'outil, amené sensiblement dans l'axe du tube à traiter et par rapport auquel l'outil d'intervention est à recaler de façon précise et rapide.

A cet effet le procédé considéré, pour le positionnement d'un outil porté par un bras de manipulation ou support analogue, apte à être déplacé selon trois directions de l'espace respectivement perpendiculaires, vis-à-vis d'un axe de référence, notamment l'axe longitudinal d'un tube,

De préférence, les trois sources d'éclairement sont constituées par des lampes ponctuelles, notamment du type lampes halogènes, dont les faisceaux lumineux qu'elles délivrent, après réflexion sur l'extrémité du tube, sont reçus par trois systèmes optiques indépendants, renvoyant les images des trois points du tube éclairés par les sources vers une caméra commune reliée au moniteur vidéo.

L'invention concerne également un dispositif pour la mise en oeuvre de ce procédé, caractérisé en ce qu'il comporte un bâti de support en forme de fer à cheval, entourant partiellement et sans contact direct le corps d'un outil d'intervention dont la broche est prévue pour être placée coaxialement à l'axe d'un tube, ce bâti comprenant au moins trois sources d'éclairement disposées sensiblement à 120° autour de la broche et trois systèmes optiques, chaque source délivrant un faisceau lumineux étroit dirigé tangentiellement sur la périphérie du tube à une de ses extrémités pour fournir une image d'un point de celle-ci consiste à disposer sur ce bras au moins une source d'éclairement, fournissant un faisceau lumineux dirigé vers la périphérie d'un tube , à retransmettre par un ensemble optique également porté par le bras, l'image du tube éclairé par la source en direction d'un moniteur vidéo dont l'écran comporte une pluralité de réticules délimitant le contour réel de ce tube, puis à faire coïncider l'image du tube avec au moins un des réticules, caractérisé en ce qu'il consiste à utiliser trois réticules répartis à 120° autour de l'axe de l'image du tube sur l'écran et trois sources d'éclairement disposées de façon symétrique et également à 120° sur un bâti de support en forme de fer en cheval entourant partiellement et sans contact direct le corps de l'outil porté par le bras, chacune de ces sources, associée à un système optique , fournissant un faisceau lumineux dirigé tangentiellement vers la périphérie du tube, l'ensemble optique retransmettant les images de trois points déterminés du tube éclairés par les trois sources vers le moniteur, et à faire coïncider ces trois images avec les trois réticules, afin de centrer rigoureusement l'axe de l'outil sur l'axe dudit tube. recueillie par le système optique associé à chaque source, les images des trois points étant retransmises sur l'écran d'un moniteur vidéo comprenant trois réticules délimitant le contour réel du tube, et des moyens pour déplacer l'outil vis-à-vis du tube afin de faire coïncider ces images avec les réticules pour centrer l'axe de l'outil sur l'axe du tube.

De préférence, chaque système optique est constitué par une fibre optique, les trois systèmes correspondant aux trois sources d'éclairement étant également sensiblement répartis à 120° autour de l'axe de l'outil et portés par le bâti de support au voisinage immédiat de chaque source. De préférence également, les trois sources sont constituées par des lampes halogènes ponctuelles.

Les images des trois points du tube, recueillies séparément par les trois fibres, sont avantageusement renvoyées à un capteur unique à état solide, notamment du genre à transfert de charges, raccordé à une caméra commune, transmettant simultanément ces images à l'écran du moniteur vidéo comportant les trois réticules de positionnement.

Selon une autre caractéristique, le bâti de support comporte une patte de fixation avec le corps de l'outil d'intervention au moyen de vis de réglage ou analogues, permettant de faire coïncider le centre du bâti en fer à cheval avec l'axe de l'outil. Selon une autre caractéristique également, la face d'extrémité de chaque système optique est placée de telle sorte que la perpendiculaire à celle-ci délimite avec la direction de l'axe du tube un angle déterminé, le faisceau lumineux étroit délivré par la source associée présentant un angle d'ouverture donné, centré sur cette perpendiculaire, de telle sorte que ce faisceau, amené tangent avec la périphérie du tube, fournisse une image représentant une fraction de la partie interne de ce tube et simultanément une fraction de la partie externe de ce tube.

D'autres caractéristiques du procédé de positionnement à distance d'un outil par rapport à l'axe longitudinal d'un tube et du dispositif pour la mise en oeuvre de ce procédé, apparaîtront encore à travers la description qui suit d'un exemple de réalisation, donné à titre indicatif et non limitatif, en référence aux dessins annexés sur lesquels :
- La Figure 1 est une vue schématique en coupe partielle et en perspective d'une plaque à tubes d'un générateur de vapeur pour réacteur nucléaire en soi connu et d'un outil d'intervention sur un tube quelconque de cette plaque, comportant des moyens de centrage automatique établis conformément à l'invention.
- Les Figures 2 et 3 représentent à deux échelles différentes le bâti de support et les moyens qu'il comporte, destinés à être montés sur le corps de l'outil pour permettre le centrage de celui-ci vis-à-vis de l'axe du tube choisi.
- La Figure 4 est une vue en coupe transversale à plus grande échelle du bâti et plus particulièrement d'un des systèmes optiques portés par ce dernier, permettant d'expliciter plus précisément la mise en oeuvre du dispositif considéré.
- Les Figures 5 et 6 sont des vues schématiques de face d'un écran vidéo associé aux moyens portés par le bâti de support, montrant l'image du tube obtenue, respectivement avant et après centrage de l'outil vis-à-vis de l'axe de ce tube.

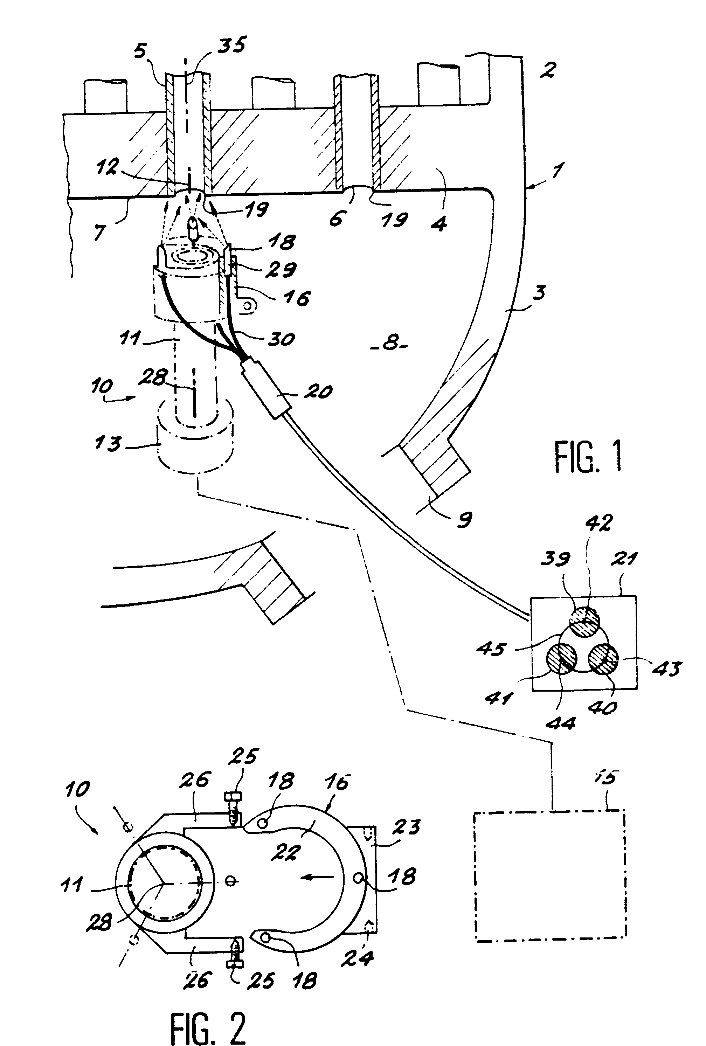

Sur la Figure 1 la référence 1 désigne de façon très générale l'enceinte d'un générateur de vapeur pour réacteur nucléaire, ce générateur comportant une enveloppe externe 2 dont le fond inférieur 3 notamment se présente sous la forme d'une calotte sphérique qui se raccorde à l'enveloppe 2 au droit d'une plaque transversale 4, dite plaque à tubes, celle-ci étant associée à une pluralité de tels tubes 5, traversant la plaque 4 en étant convenablememt immobilisée par rapport à celle-ci. De préférence, les tubes 5 sont solidarisés de la plaque 4 en étant dudgeonnés par rapport à celle-ci de manière à rendre leur liaison étanche, ces tubes 5 débouchant par leur extrémité inférieure 6 dans la surface correspondante 7 de la plaque 4.

De façon usuelle, la plaque à tubes 4 s'étend transversalement dans l'enceinte 2, les tubes 5 formant ensemble un faisceau de tubes parallèles d'axe vertical, ces tubes étant prévus pour être parcourus intérieurement par un fluide primaire sous pression, échangeant des calories à travers la paroi de ces tubes avec un fluide secondaire circulant à l'extérieur de ces tubes pour être vaporisé, la vapeur produite étant recueillie à l'extérieur du générateur, notamment pour assurer par détente de celle-ci, l'entraînement d'une turbine commandant celui d'une machine de production d'électricité.

La plaque à tubes 4 délimite avec la calotte sphérique 3 à la partie inférieure du générateur 1, une région 8, généralement appelée boîte à eau, à l'intérieur de laquelle le fluide primaire est introduit par une tubulure d'amenée 9 ménagée dans la calotte 3, l'ouverture de cette dernière permettant également d'introduire dans la région 8 un outil d'intervention, schématiquement désigné dans son ensemble sous la référence 10, cet outil comportant de façon simplifiée un corps 11, muni d'une broche centrale 12 destinée à venir effectuer sur l'extrémité inférieure 6 d'un quelconque des tubes 5 du faisceau ou à l'intérieur de ce tube dans sa partie solidarisée de la plaque 4, une réparation ou une opération d'entretien déterminée.

Le corps d'outil 11 est porté par un bras de télémanipulateur ou engin analogue, dont seule l'extrémité 13 réunie à l'outil a été succinctement représentée, ce bras figuré par la ligne en traits mixtes 14 permettant de réaliser des déplacements de l'outil 10 selon l'une quelconque des trois directions de l'espace, notamment selon un mouvement de montée ou de descente pour approcher ou retirer la broche 12 vis-à-vis d'un tube 5 quelconque dans le faisceau des tubes de la plaque 4 et également pour déplacer cet outil d'un tube à l'autre à l'intérieur de la région 8. Le bras 14 est à cet effet réuni à l'extérieur du générateur 1, à un ensemble de commande 15 qui permet de contrôler ces mouvements et de positionner de façon précise la broche 12 dans l'axe du tube 5 choisi ou en toute autre position rendue nécessaire par l'intervention à effectuer sur ce tube.

Conformément à l'invention, le corps 11 de l'outil 10 est directement muni de moyens optiques et de traitement des informations fournies par ces moyens pour permettre de faire coïncider de façon sûre, rapide et précise l'axe de la broche et celui du tube sur lequel cette intervention est à réaliser.

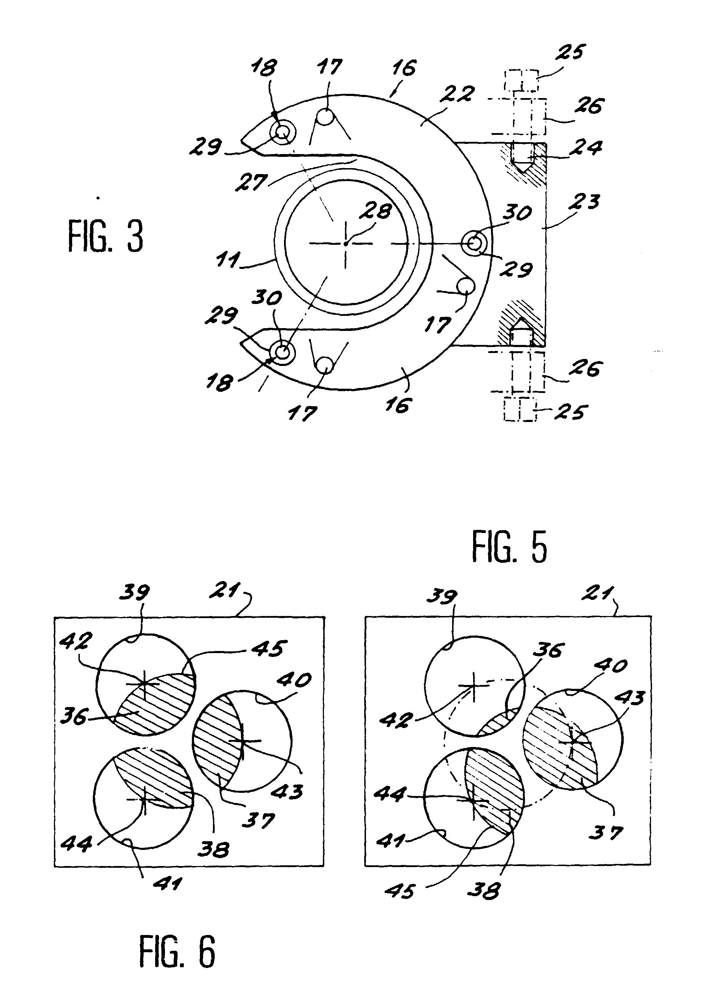

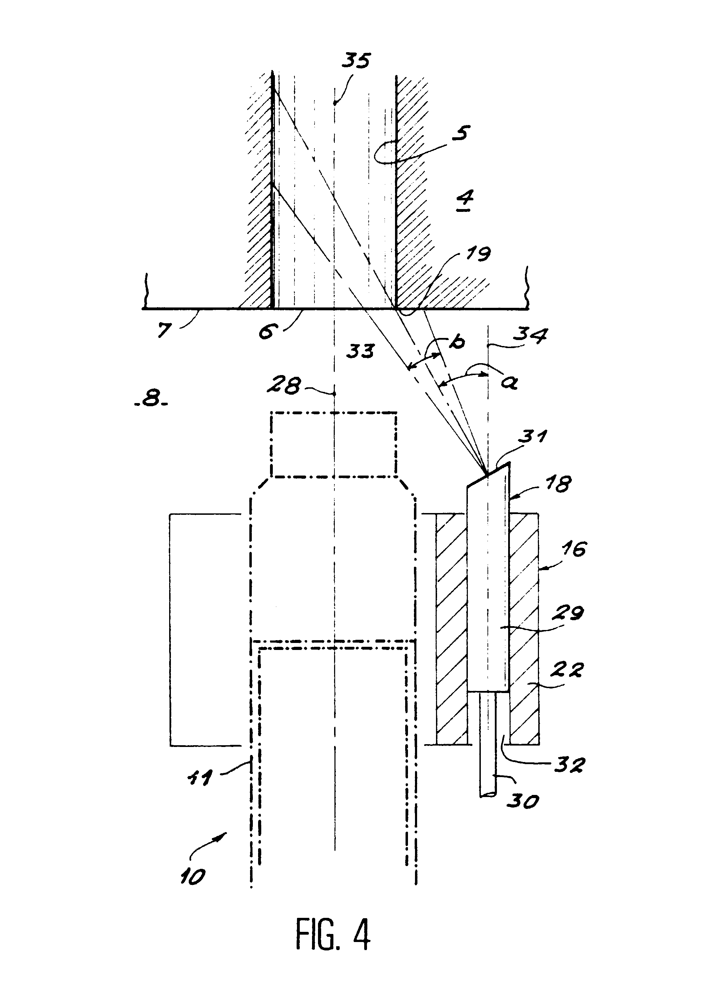

A cet effet, le corps 11 est associé à un bâti de support 16, portant des organes d'éclairement 17 (schématiquement représentés sur la Figure 3) pour éclairer l'extrémité inférieure 6 du tube 5 sélectionné, affleurant dans la face 7 de la plaque 4 dirigée vers la région 8, ainsi que des systèmes optiques 18, coopérant avec ces organes d'éclairement 17, de telle sorte que l'image de points donnés tels que 19, appartenant à cette extrémité 6, puisse être directement transmise par les systèmes optiques à une caméra 20, fournissant elle-même une image sur l'écran 21 d'un moniteur vidéo, en représentant la section correspondante du tube considéré.

Les Figures 2 et 3 illustrent de manière plus précise le montage du bâti de support 16 sur le corps 11 de l'outil 10, ce bâti se présentant de préférence sous la forme d'un élément 22 en fer à cheval, muni d'une patte de fixation 23 comportant des alésages borgnes 24, propres à coopérer avec des vis de blocage 25 montées en bout de deux équerres de positionnement 26 s'étendant parallèlement l'une à l'autre et de façon symétrique de chaque côté du corps 11. Comme représenté à plus grande échelle sur la Figure 3, on voit que, grâce à ces dispositions, l'élément en fer à cheval 22 du bâti 16 peut venir entourer partiellement le corps de l'outil tout en laissant libre par rapport à celui-ci un jeu circonférenciel 2 7, en disposant symétriquement par rapport à l'axe vertical 28 de l'outil les moyens d'éclairement 17 et les systèmes optiques 18 portés par le bâti 16, ceci sans qu'il soit nécessaire de procéder à un quelconque démontage de la broche, le bâti venant se mettre en place par un simple déplacement latéral vis-à-vis du corps 11.

Dans l'exemple de réalisation plus spécialement considéré, le bâti 16 comporte trois lampes ou autres moyens d'éclairage analogues 17, de préférence constituées par des lampes halogènes, aptes à délivrer un pinceau étroit de lumière en direction de l'extrémité inférieure 6 du tube 5 lorsque l'outil 10 est convenablement approché de la plaque 4. Ces trois lampes 17 sont sensiblement réparties à 120° l'une de l'autre autour de l'axe 28, chaque lampe étant associée à un système optique 18 qui est, également de façon préférentielle, constituée par l'embout d'extrémité 29 d'une fibre optique 30, comme le montre de façon plus précise la Figure 4.

Par construction, chacune des trois lampes 17 est disposée sur le bâti de support 16 au voisinage immédiat de l'embout 29 du système optique 18 associé, chaque embout présentant notamment une face plane tronque 31. Chaque embout 29 est monté dans un logement approprié 32 prévu dans l'élément 22, de telle sorte que la perpendiculaire 33 à la face 31 délimite avec la direction verticale 34 un angle a, le faisceau lumineux étroit issu de la source 17 associée présentant autour de cette perpendiculaire 33 un angle d'ouverture b.

En fonctionnement, le bras du télémanipulateur 14 est commandé dans le sens vertical de telle sorte que, le faisceau lumineux issu de chaque source 17 vienne tangenter au point 19 la partie inférieure 6 du tube 5 à l'endroit où celui-ci débouche dans la face 7 de la plaque 4, l'ouverture b du faisceau permettant d'obtenir une image de cette partie du tube représentant une fraction de l'intérieur de ce dernier et, simultanément, une fraction de l'extérieur au droit de la plaque 4.

Les images des points 19, correspondant ainsi à chacune des trois lampes d'éclairement 17, reprises par les trois fibres optiques 30 des systèmes optiques 18 associés, sont alors réunies et transmises à un capteur unique (non représenté), de préférence du genre capteur à état solide à transfert de charges (CCD) de la caméra de prise de vues 20, qui renvoie ces images sur l'écran 21 du moniteur vidéo disposé à l'extérieur du générateur 1 et à partir duquel l'utilisateur commande le dispositif de contrôle 15, assurant les déplacements du bras du télémanipulateur 14 et par suite de l'outil 10.

Les trois images obtenues, du fait de la disposition des sources lumineuses 17 et des systèmes optiques 18 montés à 120° autour de l'axe 28 de l'outil, représentent donc chacune une portion du tube et de la plaque tubulaire dans la région adjacente à celui-ci, avec un grossissement acceptable, compatible avec la précision requise. Dans ces conditions, lorsque l'axe 28 de l'outil 10 est décalé vis-à-vis de l'axe 35 du tube 5 considéré (Figure 5), les trois images partielles du tube examiné sont représentées par trois fractions de cercle, respectivement 36, 37 et 38, dont les contours s'inscrivent de façon différente de l'une à l'autre à l'intérieur de trois cercles identiques 39, 40 et 41, respectivement centrés sur trois réticules 42, 43 et 44, apparaissant sur l'écran 21 et disposés de telle sorte qu'ils définissent le contour du tube 5 examiné. En revanche, lorsque l'outil est parfaitement centré vis-à-vis du tube, c'est-à-dire lorsque l'axe 28 coïncide strictement avec l'axe 35 (Figure 6), les trois images 36, 37 et 38 sont identiques et présentent toutes un point d'intersection avec les réticules 42, 43 et 44 des cercles 39, 40 et 41, l'image de l'extrémité 6 du tube, correspondant sur l'écran au cercle 45 passant dès lors par ces trois réticules.

Grâce à ces dispositions, on conçoit donc qu'il soit immédiatement possible de recaler l'outil sur le tube dans lequel il doit intervenir, l'opérateur examinant l'écran vidéo 21 assurant, par la commande du dispositif 15, les déplacements nécessaires de l'outil, propres à amener sa broche 12 dans l'axe du tube, ce recalage correspondant directement sur l'écran au centrage du cercle 45 sur les réticules.

Bien entendu, il va de soi que l'invention ne se limite pas à l'exemple de réalisation plus spécialement décrit ci-dessus et représenté en référence aux dessins annexés. Dans cet exemple en effet, l'exploitation de l'image de l'extrémité du tube fournie par la caméra est effectuée par un opérateur. En variante, elle pourrait être réalisée par un système de traitement d'images, générant des signaux d'erreur de positionnement, proportionnels au désalignement des axes du tube et de l'outil. De même, si l'exemple décrit envisage l'emploi de trois sources d'éclairement et de trois systèmes optiques associés, on pourrait aussi bien concevoir un nombre plus importants de tels composants, respectant une disposition symétrique autour de l'axe du corps de l'outil.

De préférence également, on a prévu d'utiliser sur le titi de support porté coaxialement par le corps de l'outil, des lampes halogènes, permettant un éclairement notable de l'extrémité du tube et un contraste sensible entre la plaque tubulaire proprement dite et la région interne de ce tube. D'autres systèmes optiques pourraient bien entendu être envisagés, fournissant un rayonnement directif étroit, notamment par faisceaux laser ou autres, ces organes d'éclairement étant dans tous les cas avantageusement associés à des moyens de commande de leur extinction pour leur éviter des interférences avec les autres moyens de contrôle optique mis en oeuvre pour vérifier le fonctionnement correct du bras du télémanipulateur assurant le positionnement de l'outil.

Le dispositif selon l'invention ne comporte par lui-même aucun élément mobile, ce qui constitue le gage d'une bonne résistance mécanique et d'une durée de vie appréciable. En outre, son encombrement, en particulier en hauteur peut être très réduit de manière à ne pas gêner les mouvements du bras du télémanipulateur. Le temps nécessaire à une opération de centrage de l'outil peut être enfin très bref, ce qui réduit d'autant la durée des travaux de maintenance à effectuer sur les tubes, tout en alliant à cette rapidité d'exploitation une excellente fiabilité, la précision du positionnement pouvant être inférieure à 0,2 mm.

Enfin et de façon plus générale, on comprend aisément que l'invention peut être mise en oeuvre quel que soit le type de tube sur lequel intervient l'outil de manutention ou de travail, que ce dernier soit utilisé pour une intervention dans un générateur de vapeur pour réacteur nucléaire ou sur toute autre installation comprenant une pluralité de tubes, manchettes, ou autres organes ou composants creux similaires, présentant des axes parallèles, solidarisés ou non d'une ou de plusieurs plaques transversales qu'ils traversent.

## Revendications

1. Procédé pour le positionnement d'un outil porté par un bras de manipulation ou support analogue, apte à être déplacé selon trois directions de l'espace respectivement perpendiculaires, vis-à-vis d'un axe de référence, notamment l'axe longitudinal d'un tube (5), consistant à disposer sur ce bras au moins une source d'éclairement (17), fournissant un faisceau lumineux dirigé vers la périphérie d'un tube (5), à retransmettre par un ensemble optique (18) également porté par le bras, l'image du tube éclairé par la source en direction d'un moniteur vidéo dont l'écran (21) comporte une pluralité de réticules délimitant le contour réel de ce tube, puis à faire coïncider l'image du tube avec au moins un des réticules, caractérisé en ce qu'il consiste à utiliser trois réticules répartis à 120° autour de l'axe de l'image du tube sur l'écran et trois sources d'éclairement disposées de façon symétrique et également à 120° sur un bâti de support en forme de fer en cheval entourant partiellement et sans contact direct le corps de l'outil porté par le bras, chacune de ces sources, associée à un système optique (18), fournissant un faisceau lumineux dirigé tangentiellement vers la périphérie du tube, l'ensemble optique retransmettant les images de trois points déterminés du tube éclairés par les trois sources vers le moniteur, et à faire coincider ces trois images avec les trois réticules, afin de centrer rigoureusement l'axe (28) de l'outil sur l'axe (35) dudit tube.

2. Procédé selon la revendication 1, caractérisé en ce que l'on constitue les trois sources d'éclairement par des lampes ponctuelles, notamment du type lampes halogènes, et l'ensemble optique par trois systèmes indépendants, les faisceaux lumineux délivrés par les sources, après réflexion sur l'extrémité du tube, étant reçus par les systèmes optiques, renvoyant les images des trois points du tube éclairés par les sources vers une caméra commune (20) reliée au moniteur vidéo.

3. Dispositif pour la mise en oeuvre du procédé selon la revendication 1, caractérisé en ce qu'il comporte un bâti de support (16) en forme de fer à cheval, entourant partiellement et sans contact direct le corps (11) d'un outil d'intervention (10) dont la broche (12) est prévue pour être placée coaxialement à l'axe (35) d'un tube (5), ce bâti comprenant trois sources d'éclairement (17) disposées sensiblement à 120° autour de la broche et trois systèmes optiques (18), chaque source délivrant un faisceau lumineux étroit dirigé tangentiellement sur la périphérie du tube à une de ses extrémités (6) pour fournir une image d'un point (19) de celle-ci recueillie par le système optique associé à chaque source, les images des trois points étant retransmises sur l'écran (21) d'un moniteur vidéo comprenant trois réticules (42, 43, 44) délimitant le contour réel du tube, et des moyens pour déplacer l'outil vis-à-vis du tube afin de faire coïncider ces images avec les réticules pour centrer l'axe (28) de l'outil sur l'axe du tube.

4. Dispositif selon la revendication 3, caractérisé en ce que chaque système optique (18) est constitué par une fibre optique (30), les trois systèmes correspondant aux trois sources d'éclairement (17) étant également sensiblement répartis à 120° autour de l'axe (28) de l'outil et portés par le bâti de support (16) au voisinage immédiat de chaque source.

5. Dispositif selon l'une des revendications 3 ou 4, caractérisé en ce que les trois sources (17) sont constituées par des lampes halogènes ponctuelles.

6. Dispositif selon l'une des revendications 4 ou 5, caractérisé en ce que les images des trois points (19) du tube (5), recueillies séparément par les trois fibres (30), sont renvoyées à un capteur unique à état solide, notamment du genre à transfert de charges, raccordé à une caméra commune (20), transmettant simultanément ces images à l'écran (21) du moniteur vidéo comportant les trois réticules (42, 43, 44) de positionnement.

7. Dispositif selon l'une quelconque des revendications 3 à 6, caractérisé en ce que le bâti de support (16) comporte une patte de fixation (23) avec le corps (11) de l'outil d'intervention au moyen de vis de réglage (25) ou analogues, permettant de faire coïncider le centre du bâti en fer à cheval avec l'axe (28) de l'outil.

8. Dispositif selon l'une quelconque des revendications 4 à 7, caractérisé en ce que la face d'extrémité (30) de chaque système optique (18) est placée de telle sorte que la perpendiculaire (33) à cette face délimite avec la direction de l'axe (35) du tube un angle (a) déterminé, le faisceau lumineux étroit délivré par la source associée (17) présentant un angle (b) d'ouverture donné, centré sur cette perpendiculaire.

9. Application du procédé selon l'une des revendications 1 ou 2, à une intervention sur un tube d'un générateur de vapeur pour réacteur nucléaire, au moyen du dispositif selon 5 l'une quelconque des revendications 3 à 8.

## Patentansprüche

1. Verfahren zur Positionierung eines Werkzeugs, welches von einem Handhabungsarm oder einem ähnlichen Träger getragen wird, und welches in drei jeweils zueinander senkrechten Raumachsen gegenüber einer Bezugsachse, insbesondere der Längsachse eines Rohrs (5) beweglich ist, bei dem auf dem Arm mindestens eine Lichtquelle (17) angeordnet wird, welche einen auf den Rand eines Rohrs (5) gerichteten Lichtstrahl liefert, bei dem durch eine optische Anordnung (18), die ebenfalls von dem Arm getragen wird, das Bild des durch die Lichtquelle beleuchteten Rohrs auf einen Videomonitor übertragen wird, dessen Bildschirm (21) mehrere Strichkreuze aufweist, die den wahren Umriß des Rohrs eingrenzen, und bei dem das Bild des Rohres mit mindestens einem der Strichkreuze zur Überlappung gebracht wird, dadurch gekennzeichnet, daß drei Strichkreuze verwendet werden, die um jeweils 120° versetzt um die Achse des Bilds des Rohrs auf dem Bildschirm verteilt sind und drei Lichtquellen symmetrisch und ebenfalls um jeweils 120° versetzt auf einem Träger-gerüst in Form eines Hufeisens angeordnet sind, welcher teilweise und ohne direkten Kontakt den Körper des Werkzeugs umgibt, welches durch den Arm getragen wird, wobei jede dieser Lichtquellen, die mit einem optischen System (18) verbunden ist, einen Lichtstrahl liefert, der tangential auf den Rand des Rohrs gerichtet ist, wobei die optische Anordnung, die die Bilder von drei bestimmten Punkten des durch die drei Quellen erleuchteten Rohrs auf den Monitor überträgt und die drei Bilder mit den drei Strichkreuzen zur Überlappung gebracht werden, um die Achse (28) des Werkzeugs auf der Achse (35) des Rohrs zu zentrieren.

2. Verfahren nach Anspruch 1, dadurch gekennzeichnet, daß die drei Lichtquellen durch punktförmige Lampen, insbesondere Halogenlampen gebildet werden und die optische Anordnung aus drei unabhängigen Systemen besteht, wobei die von den Lichtquellen erzeugten Lichtstrahlen nach ihrer Reflexion an dem Ende des Rohrs durch optische Systeme aufgenommen werden, die die Bilder der drei durch die Lichtquellen beleuchteten Punkte des Rohrs auf eine gemeinsame Kamera (20) übertragen, die an einen Videomonitor angeschlossen ist.

3. Vorrichtung zur Durchführung des Verfahrens nach Anspruch 1, gekennzeichnet durch eine Trägerstruktur (16) in Form eines Hufeisens, die teilweise und ohne direkten Kontakt den Körper (11) eines Einsatzwerkzeuges (10) umgibt, dessen Welle (12) koaxial zur Achse (35) eines Rohrs (5) ausgerichtet werden soll, wobei die Struktur drei Lichtquellen (17) aufweist, die im wesentlichen um 120° versetzt um die Welle angeordnet sind, sowie drei optische Anordnungen (18), wobei jede Lichtquelle einen schmalen Lichtstrahl liefert, der tangential auf den Rand des Rohrs an einem seiner Enden (6) gerichtet ist, um ein Bild eines Punktes (19) des Rohrs zu liefern, welches von der mit jeder Quelle verbundenen optischen Anordnung aufgenommen wird, wobei die Bilder der drei Punkte auf den Bildschirm (21) eines Videomonitors übertragen werden, welcher drei Strichkreuze (42, 43, 44) aufweist, die den wahren Umfang des Rohrs eingrenzen und wobei die Vorrichtung Mittel aufweist, zum Bewegen des Werkzeugs gegenüber dem Rohr, um die Bilder mit den Fadenkreuzen in Überlappung zu bringen, um die Achse des Werkzeugs (28) auf der Rohrachse zu zentrieren.

4. Vorrichtung nach Anspruch 3, dadurch gekennzeichnet, daß jede optische Anordnung (18) aus einer Glasfaser (30) besteht, wobei die drei Anordnungen, die den drei Lichtquellen (17) zugeordnet sind, ebenfalls ungefähr um jeweils 120° versetzt um die Achse (28) des Werkzeugs angeordnet sind und von der Trägerstruktur (16) in unmittelbarer Nähe jeder Lichtquelle getragen werden.

5. Vorrichtung nach einem der Ansprüche 3 oder 4, dadurch gekennzeichnet, daß die drei Lichtquellen (17) aus punktförmigen Halogenlampen bestehen.

6. Vorrichtung nach einem der Ansprüche 4 oder 5, dadurch gekennzeichnet, daß die Bilder der drei Punkte (19) des Rohrs (5), die durch die drei Fasern (30) getrennt voneinander aufgenommen sind, auf einen einzelnen Festkörperdetektor geschickt werden, insbesondere eines Detektors mit Ladungstransfer, der an eine gemeinsame Kamera (20) angeschlossen ist, die gleichzeitig diese Bilder auf den Bildschirm (21) des videomonitors überträgt, der die drei Positionierungs-strichkreuze (42, 43, 44) aufweist.

7. Vorrichtung nach einem der Ansprüche 3 bis 6, dadurch gekennzeichnet, daß die Trägerstruktur (16) ein Befestigungselement (23) für den Körper (11) des Einsatz-werkzeugs aufweist, mit einer Riegelschraube (25) oder dergleichen, die es ermöglicht die Mitte der Hufeisenstruktur mit der Werkzeugachse (28) in Überlappung zu bringen.

8. Vorrichtung nach einem der Ansprüche 4 bis 7, dadurch gekennzeichnet, daß die Endfläche (30) jeder optischen Anordnung (18) so angeordnet ist, daß die Senkrechte (33) auf dieser Fläche mit der Richtung der Rohrachse (35) einen Winkel (a) eingrenzt, der so bestimmt ist, daß der schmale Lichtstrahl, der von der zugehörigen Lichtquelle (17) erzeugt wird, einen vorgegebenen Öffnungswinkel (b) hat, der auf dieser Senkrechten zentriert ist.

9. Anwendung des Verfahrens nach einem der Ansprüche 1 oder 2, bei einem Einsatz an einem Rohr eines Dampferzeugers für einen Kernreaktor mittels der Vorrichtung nach einem der Ansprüche 3 bis 8.

## Claims

1. Procedure for positioning a tool supported by a manipulation arm or similar support, able to be moved in three directions that are perpendicular to one another in relation to a reference axis, in particular the longitudinal axis of a tube (5), comprising mounting on this arm at least one source of light (17), supplying a light beam directed towards the periphery of a tube (5), retransmitting by an optic assembly (18) also supported by the arm, the image of the tube illuminated by the source in the direction of a video monitor, the screen (21) of which comprises a plurality of reticles, delimiting the actual outline of this tube, then coinciding the image of the tube with at least one of the reticles, characterised in that it comprises using three reticles arranged at 120° around the axis of the image of the tube on the screen and three sources of light arranged symmetrically and also at 120° on a support frame in the form of a horseshoe partly surrounding without direct contact the body of the tool supported by the arm, each of the sources connected to an optical system (18) providing a light beam directed tangentially towards the periphery of the tube, the optical assembly retransmitting the images of the three determined points of the tube illuminated by the three sources towards the monitor, and coinciding these three images with the three reticles in order to centre precisely the axis (28) of the tool on the axis (35) of said tube.

2. Procedure according to claim 1, characterised in that the three sources of light are point source lights, in particular halogen lamps, and the optical assembly comprises three independent systems, the light beams delivered by the sources, after reflection on the end of the tube, being received by the optical systems, returning the images of the three points of the tube illuminated by the sources to a joint camera (20) connected to a video monitor.

3. Device for performing the procedure according to claim 1, characterised in that it comprises a support frame (16) in the form of a horseshoe, partly surrounding without direct contact the body (11) of an operating device (10), the pin (12) of which is designed to be positioned coaxially in relation to the axis (35) of a tube (5), said support comprising three sources of light (17) disposed around the pin approximately at 120 ° and three optical systems (18), each source delivering a narrow light beam directed tangentially on the periphery of the tube at one of its ends (6) to provide an image of a point (19) thereof received by the optical system connected to each source, the images of the three points being retransmitted onto the screen (21) of a video monitor comprising three reticles (42, 43, 44) delimiting the actual contour of the tube and means to move the tool in relation to the tube in order to make these images coincide with the reticles to centre the axis (28) of the tool on the axis of the tube.

4. Device according to claim 3, characterised in that each optical system (18) comprises an optical fibre (30), the three systems corresponding to three light sources (17) also arranged around the axis (28) of the tool at approximately 120° and supported by the support frame (16) in the immediate vicinity of each source.

5. Device according to one of claims 3 or 4, characterised in that the three sources (17) are point source halogen lamps.

6. Device according to one of claims 4 or 5 characterised in that the images of the three points (19) of the tube (5), received separately by the three fibres (30) are returned to a solid state single sensor, in particular of the charge transfer type, connected to a joint camera (20), simultaneously transmitting these images to the screen (21) of the video monitor comprising the three positioning reticles (42, 43, 44).

7. Device according to any one of claims 3 to 6, characterised in that the support frame (16) comprises a tab (23) for securing it to the body (11) of the operating tool by means of an adjusting screw (25) or similar, making it possible to coincide the centre of the horseshoe support with the axis (28) of the tool.

8. Device according to any one of claims 4 to 7, characterised in that the end face (30) of each optical system (18) is positioned so that the perpendicular (33) to this face delimits with the direction of the axis (35) of the tube a specific angle (a), the narrow light beam supplied by the associated source (17) forming a given opening angle (b), centred on this perpendicular.

9. Application of the procedure according to one of claims 1 or 2 on an operation on a tube of a vapour generator for a nuclear reactor by means of the device according to any one of claims 3 to 8.
